Europäisches Patentamt

European Patent Office

Office européen des brevets

(11) Publication number: **0 481 325 A2**

## EUROPEAN PATENT APPLICATION

(21) Application number: **91117081.9**

(22) Date of filing: **08.10.91**

(51) Int. Cl.5: **C08L 27/06**, C08F 2/06, C08K 13/00

(30) Priority: **19.10.90 US 600548**

(43) Date of publication of application:
**22.04.92 Bulletin 92/17**

(84) Designated Contracting States:
**AT BE CH DE DK ES FR GB GR IT LI LU NL SE**

(71) Applicant: **THE B.F. GOODRICH COMPANY**
**3925 Embassy Parkway**
**Akron Ohio 44313-1799(US)**

(72) Inventor: **Balasko, Michael Mato**
**8212 Kenton Avenue**
**Parma, Ohio 44129(US)**
Inventor: **Skillicorn, Douglas Earl**
**524 Skylark Court**
**Elyria, Ohio 44035(US)**
Inventor: **Forsyth, Thomas Henry**
**1924 26th Street**
**Cuyahoga Falls, Ohio 44223(US)**

(74) Representative: **von Kreisler, Alek,**
**Dipl.-Chem. et al**
**Patentanwälte Von Kreisler-Selting-Werner,**
**Deichmannhaus am Hauptbahnhof**
**W-5000 Köln 1(DE)**

(54) Polyvinyl chloride compositions having improved processing stability.

(57) Often common thermal stabilizers when used alone with commercial PVC resins are not sufficient for use in systems where thermal stability is required for extended periods of time, *e.g.,* accumulator blow molding or hot runner (injection) molding. The incorporation of a metal salt of phosphoric acid into a PVC formulation, or compound, having a primary stabilizer results in a substantial improvement in the thermal stability of the formulation during subsequent processing thereof. The PVC was polymerized at lower temperatures in the presence of a solvent. This provides polyvinyl chloride formulations which have increased thermal stability.

EP 0 481 325 A2

**Field of the Invention**

The present invention relates to improved polyvinyl chloride (PVC) compositions having increased heat stability. These compositions have improved moldability over prior PVC compositions. The new compositions will allow the use of PVC in applications that were previously unattainable.

**Background of the Invention**

Polyvinyl chloride (PVC) has enjoyed a great deal of commercial success as a material which can form useful articles. The ease at which it can be molded, extruded, calendered or formed and its low cost has contributed to this success. However, the use of high processing temperatures may lead to a chemical breakdown of the polymer, resulting in discoloration, evolution of hydrochloric acid, cross-linking, and loss of physical properties. Consequently, heat stabilizers must be compounded in with PVC resin to prevent or at least minimize the degradation process.

For years, a wide variety of thermal stabilizers have provided adequate stabilization to enable PVC to survive the common fabrication techniques, such as extrusion (e.g., pipe), calendaring (film and sheet), extrusion blow molding (bottles), and injection molding (pipe fittings). However, as the vinyl industry attempted to introduce PVC into new markets, fabrication techniques were encountered which induce more shear and heat history on the polymer than ever before, stretching traditional stabilization methods to their limits.

To achieve these goals, the focus has been to improve the inherent thermal stability of the PVC resin itself. In 1978 a process for making PVC resin with improved heat stability was developed and disclosed in U.S. Patent No. 4,070,534 to Jones *et al.* incorporated herein by reference to the present specification. It is commonly known that as polymerization temperature decreases, molecular weight increases and thermal stability improves. Jones disclosed that incorporating tetrahydrofuran (THF), a solvent for PVC, in the reactor not only reduced molecular weight of the PVC produced during polymerization at low temperatures, but also significantly improved the thermal stability of the PVC produced. Thus the combination of reduced temperature and the presence of THF create a PVC with improved thermal stability over a wide range of molecular weights.

Examples of processes requiring PVC with enhanced thermal stability include hot runner injection molding, injection molding of large and complex parts, and accumulator or structural blow molding. Hot runner injection molding is the production of injection molded parts without producing a sprue or runner system due to a heated manifold which keeps the polymer in the runner system at processing temperatures. Employing a hot runner system introduces a complex heated pathway for the PVC to travel after it exits the barrel. The PVC spends a longer time at the processing temperature than in extrusion or conventional injection molding and possibly encounters non-uniform temperatures. Both these factors increase the potential for thermal degradation and take conventional stabilization methods to their limit. Molders have tended to shy away from PVC hot runner molding because of the added potential for degradation which could corrode their molds.

Structural blow molding involves the fabrication of large hollow parts using an accumulator blow molding machine. Continuous extrusion and reciprocating extrusion blow molding machines, commonly used for small hollow parts, are limited in their parison delivery by the rate at which the extruder can pump out material. A slow parison delivery results in excessive parison cooling, making the parison difficult to form to the mold. The accumulator/ram assembly allows for fast parison delivery to avoid excessive cooling. The accumulator piston (ram) is retracted vertically as the melt from the extruder enters the accumulator head (chamber). When the proper shot size is achieved, the piston is pushed downward at a desired speed to force material through an open die to form an annular shaped melt (parison). Mold platens move horizontally to capture the parison and form the part. Parison weights up to 64 lbs. and heights of 6-8 ft. can be achieved.

The accumulator head acts much in the way a hot runner manifold does, providing a complex heated pathway for PVC to travel after exiting the extruder thereby increasing the potential for material degradation.

**Summary of the Invention**

We have found that the incorporation of a metal salt of phosphoric acid (phosphate salt) into a PVC formulation, or compound, having a primary stabilizer results in a substantial improvement in the thermal stability of the formulation during subsequent processing thereof. An important aspect of the present invention is the process for polymerization of the PVC. The PVC is polymerized at lower temperatures in the presence of a solvent. This provides a polyvinyl chloride which has increased thermal stability. Often common thermal stabilizers when used alone with commercial PVC resins are not sufficient for use in systems where the polymer is maintained at high temperatures for extended periods of time, *e.g.,* accumulator blow molding or hot runner (injection) molding.

**Detailed Description of the Invention**

The present invention relates to a polymeric composition comprising polyvinyl chloride (PVC), a primary stabilizer, and a metal salt of phosphoric acid. The PVC resin useful in this invention is polymerized at a temperature from about 0° to 60°C and in the presence of from about 5 parts to about 50 parts by weight of tetrahydrofuran, based on 100 parts by weight of the monomer or monomers.

It has been found that incorporation of a metal salt of phosphoric acid into a typical, stabilized PVC formulation or compound results in an improvement in the thermal stability of the formulation or compound during subsequent processing into finished articles. As examples of the salts of phosphoric acid (phosphate salts), there may be named the water-soluble alkali metal salts, such as sodium, potassium, lithium, magnesium, and the like; disodium hydrogen phosphate, the orthophosphates, such as the mono-, di-, and tri- orthophosphates of said alkali metals; the alkali metal polyphosphates, -tetrapolyphosphates, and -metaphosphates, and the like.

The preferred amount of phosphate salt in the compositions of this invention is from about 0.1 part to about 7.0 parts per 100 parts of PVC. In a preferred embodiment the amount of phosphate salt in the compositions of this invention is from about 0.1 part to about 5.0 parts per 100 parts of PVC. The most preferred amount of phosphate salt in the compositions of this invention is from about 0.2 parts to about 3.0 parts per 100 parts of PVC.

The PVC useful in the practice of the subject invention is prepared by the method of Jones, et al. in U.S. Patent No. 4,070,534 hereby incorporated by reference into the present specification. The Jones reference teaches the use of tetrahydrofuran (THF) as a solvent which is added to the monomers prior to the initiation of polymerization. The PVC prepared by this process will have increased heat stability over that of known commercial PVC.

Examples of solvents which are useful for producing PVC having improved thermal stability are ethers like tetrahydrofuran, tetrahydropyran, dioxane, diethyl ether and the like, aromatic hydrocarbons like benzene, toluene, naphthalene, xylene and the like, ketones like acetone, methyl ethyl ketone (MEK) and the like, aldehydes like butyraldehyde and the like, and chlorinated compounds like perchloroethylene and the like. These solvents can be substituted or unsubstituted. Examples of possible groups which could be substituted are halogens, alkyl groups having from 1 to 30 carbon atoms, OH, SH, or esters. The preferred solvents are unsubstituted cyclic ethers. The most preferred solvent is THF.

The incorporation of the phosphoric acid salt is accomplished by adding the phosphoric acid salt or a mixture of phosphoric acid salts to the PVC from an aqueous solution there of which optionally, contains a surfactant which wets the PVC particles and enhances the properties of the finished product. An example of a suitable surfactant is sodium lauryl sulfate. Other methods by which the salt can be added to the PVC include addition of the powdered salt to the resin. Other methods for incorporation of the salt(s) will be obvious to one having ordinary skill in compounding PVC polymers.

Polyvinyl chloride, PVC, vinyl polymer, or vinyl polymer material, as used herein, refers to homopolymers and copolymers of vinyl halides and vinylidene halides. Examples of these vinyl halides and vinylidene halides are vinyl chloride, vinyl bromide, vinylidene chloride and the like. The vinyl halides and vinylidene halides may be copolymerized with each other or each with one or more polymerizable olefinic monomers having at least one terminal $CH_2 = C<$ grouping. As examples of such olefinic monomers there may be mentioned the $\alpha,\beta$-olefinically unsaturated carboxylic acids, such as acrylic acid, methacrylic acid, ethacrylic acid, $\alpha$-cyanoacrylic acid, and the like; esters of acrylic acid, such as methyl acrylate, ethyl acrylate, butyl acrylate, octyl acrylate, cyanoethyl acrylate, hydroxyethyl acrylate, and the like; esters of methacrylic acid, such as methyl methacrylate, butyl methacrylate, hydroxyethyl methacrylate, and the like; nitriles, such as acrylonitrile, methacrylonitrile, and the like; acrylamides, such as methyl acrylamide, N-methylol acrylamide, N-butyoxy methacrylamide, and the like; vinyl ethers, such as ethyl vinyl ether, chloroethyl vinyl ether, and the like; the vinyl ketones; styrene and styrene derivatives, such as $\alpha$-methyl styrene, vinyl toluene, chlorostyrene, and the like; vinyl naphthalene, allyl and vinyl chloroacetate, vinyl acetate, vinyl pyridine, methyl vinyl ketone; the diolefins, including butadiene, isoprene, chloroprene, and the like; and other polymerizable olefinic monomers of the types known to those skilled in the art.

The present invention is particularly applicable to homopolymers and copolymers made by the polymerization of vinyl chloride or vinylidene chloride alone or in admixture with one or more polymerizable olefinic monomers copolymerizable therewith in amounts up to about 20% by weight, based on the weight of the monomer mixtures. The most preferred vinyl polymer, or resin, is polyvinyl chloride (PVC) homopolymer produced by the mass or suspension polymerization process and the invention, for simplicity and convenience, will be described in connection therewith, it being understood that this merely intended in an illustrative sense and not limitative.

The present invention also contemplates articles formed from these novel compositions. Many of these articles are formed by the accumulator blow molding process. The improved thermal stability allows these to be formed from a PVC resin. Examples of types of articles which can be formed include water vessels, including large bottles, and carboys, water softener tanks, and the like; panels, for doors, furniture, cabinets, and the like; heating or air conditioning componentry, like panels or vent work.

When making compounds, or compositions, with the phosphate salt-containing polyvinyl chloride resins of the present invention various materials are mixed therewith. For example, butadiene-acrylonitrile rubber may be added, as well as copolymer of styrene and acrylonitrile, either singly or together. Also, conventional processing aids may be employed. It is also desirable to include in the mixture, or compound, small amounts, that is, about 0.5 to about 5 parts per 100 parts by weight of said resin, of the conventional compounds useful as heat and light stabilizers (referred to herein as "primary stabilizers"). Examples of such primary stabilizers, which are well-known in the art, include the barium, cadmium, zinc, tin and leads salts of monocarboxylic acids such as barium benzoate, barium caprate, barium caprylate, barium 2-ethylhexanoate, barium laurate, barium stearate, cadmium stearate, co-precipitated fatty acid soaps of cadmium and barium, stannous maleate, dibasic lead phthalate, tribasic lead maleate, dibasic lead stearate, and zinc stearate, and the organo-tin and organo-antimony stabilizers such as the dialkyl tin and antimony mercaptides, carboxylates, and thiazoles, for example, dibutyltin dilaurate, dibutyltin maleate, di(n-octyl)tin maleate, dibutyltin bis(lauryl mercaptide), dibutyltin, S,S-bis(isooctyl thioglycolate), dibutyltin $\beta$-mercaptoproprionate, di-n-octyltin S,S-bis(isooctyl thioglycolate), di-n-octyltin $\beta$-mercaptopropionate, and dibutylantimony S,S,S-tris(isooctylthioglycolate), and the like.

The subject invention also contemplates the use of the compounds of this invention for use in accumulator blow molding and hot runner molding. These compounds show increased thermal stability and can be employed in areas where commercial PVC resins and/or compounds could not be previously be employed.

Various conventional additives can be utilized in the compositions of the present invention. Thus, heat stabilizers, lubricants, impact modifiers, fire retardants, antioxidants, UV inhibitors, and processing aids generally employed for use in polymers, specifically in PVC can be implemented. Moreover, plasticizers, such as those typically used and known to one skilled in the art can also be utilized.

Various fillers and pigments can also be employed in conventional amounts. The amounts and types of additives, fillers and/or pigments required are well known to those skilled in the art.

A torque rheometer was employed to determine the dynamic thermal stability (DTS) of the polymer compositions. In torque rheometer testing, a sample is charged to a mixing cavity which is then sealed off to prevent the introduction of air. Rotor blades in the cavity shear and mix the compound at a predetermined temperature. A plot of rotor blade torque (in metergrams) versus time is obtained to determine the stability of the compound. DTS is the time, in minutes, between the initial fusion peak and the point at which the viscosity begins to increase or decrease, due to cross-linking or chain scission.

The instrument employed was a Brabender Plastic-Corder torque rheometer using a #6 electric roller head. The test conditions employed were a bowl (cavity) temperature from about 400-410° F., a rotor speed of 75 rpm, and a charge size of 60 grams. The results are set forth in the examples.

## EXAMPLES

The invention will now be illustrated by examples. The examples are not intended to be limiting of the scope of the present invention. In conjunction with the general and detailed description above, the examples provide further understanding of the present invention and demonstrates some preferred embodiments of the invention.

### Example 1

Two PVC resins were used in this Example. The control resin was commercial PVC resin. The resin of the subject invention (subject resin) was prepared by incorporating 25 parts by weight of THF per 100 parts by weight of vinyl chloride monomer used during suspension polymerization carried out at low temperature. Compounds 1 and 3 incorporate resins without costabilizer while compounds 2 and 4 employed disodium hydrogen phosphate (DSP). The resins were treated with DSP prior to compounding by adding a 10% solution of DSP in deionized water (10 parts of DSP and 90 parts of water) to the resin in a fluidized bed dryer. Hot air was then blown through the dryer to form a fluidized bed of wet resin until nearly all the moisture was removed. The dried resin was then compounded with the remaining ingredients.

The compounding procedure for this Example was conducted as follows: PVC and its additives were first heated and mixed in a Henschel mixer. The powdered components, PVC, processing aid, and lubricants were first mixed to obtain a homogeneous powder. This was followed by the addition of the liquid tin stabilizer. The entire mixture, approximately 3400 g, was mixed and heated to 250° F, removed from the Henschel and allowed to cool. The cooled mixture was then added to a Banbury mixer where it was heated and mixed for 2-3 minutes until a temperature of 330° F was reached. The mixture was then placed on a two-roll mill at 300-320° F and milled for 2 minutes. The mill sheet was then granulated.

Table I shows the four formulations used for this example and their resulting DTS times. These results show the improvement in the thermal stability of the resin compounds of the subject invention when compared with commercial PVC resin.

TABLE I

| Run # | 1 | 2 | 3 | 4 |
|---|---|---|---|---|
| PVC (control) | 100 | 100 | - | - |
| PVC (exp.) | - | - | 100 | 100 |
| DSP (10% sol. to wet cake) | - | 0.5 | - | 0.5 |
| Process Aid | 1.5 | 1.5 | 1.5 | 1.5 |
| Organotin Stabilizer | 1.5 | 1.5 | 1.5 | 1.5 |
| Lubricants | 0.6 | 0.6 | 0.6 | 0.6 |
| DTS Time (min.) 400° F, 75 RPM, 60 g | 19 | 23 | 31 | 52 |
| Improvement (min.) | - | +4 | - | +21 |

Example 2

The same two PVC resins as in Example I were used for this series of compounds. In this example, various levels of DSP were used. The DSP addition and compounding procedure remained the same as Example I.

Table II shows the formulations and the resulting DTS times. These data demonstrate a thermal stability increase with increasing levels of DSP.

TABLE II

| Run # | 5 | 6 | 7 | 8 | 9 | 10 | 11 |
|---|---|---|---|---|---|---|---|
| PVC (control) | 100 | 100 | - | - | - | - | - |
| PVC (exp.) | - | - | 100 | 100 | 100 | 100 | 100 |
| DSP | - | 0.5 | 0 | 0.5 | 1 | 2 | 5 |
| Impact Modifier | 13.5 | 13.5 | 13.5 | 13.5 | 13.5 | 13.5 | 13.5 |
| Process Aid | 3 | 3 | 3 | 3 | 3 | 3 | 3 |
| Organotin Stabilizer | 2 | 2 | 2 | 2 | 2 | 2 | 2 |
| Calcium Carbonate (Filler) | 5 | 5 | 5 | 5 | 5 | 5 | 5 |
| Lubricants | 4 | 4 | 4 | 4 | 4 | 4 | 4 |
| DTS Time (min.) 410° F, 75 RPM, 60 g | 25 | 42 | 54 | 80 | 90 | 94 | 100 |

Example 3

The compound formulation from runs 5 and 8 were injection molded in an 83 ton Battenfeld molding machine. The mold used was a 2-cavity mold which contained a Mold Masters hot runner system with valve gated nozzles. The two compounds were molded under the following conditions:

| | | |
|---|---|---|
| Barrel Temperatures | Back | 365°F |
| | Center | 370°F |
| | Front | 375°F |
| | Nozzle | 380°F |
| | | |
| Hot Runner Temperatures | Manifold | 360°F |
| | Nozzles | 360°F |
| | | |
| Mold Temperature | | 50°F |
| Shot Size | | 2.6 in. |
| Injection Velocity | | 100% of Max. |
| Follow-up Pressure | | 800 psi |
| Follow-up Pressure Time | | 4.5 sec |
| Back Pressure | | 125 psi |
| Cool Time | | 14 sec |

Parts made with Compound 5, incorporating commercial resin, began to show burning after 40 minutes of running. Parts made with Compound 8, incorporating the experimental resin, showed no burning after 4.5 hours of molding.

The above example illustrated how the subject invention allowed the production of parts fabricated through hot runner molding which would otherwise not be possible for extended periods of time with a compound made with standard resin.

The above preferred embodiments and examples are given to illustrate the scope and spirit of the present invention. These embodiments and examples will make apparent, to those skilled in the art, other embodiments and examples. These other embodiments and examples are within the contemplation of the present invention. Therefore, the present invention should be limited only by the appended claims.

**Claims**

1. A polymeric composition comprising polyvinyl chloride resin (PVC), a primary stabilizer for said PVC

6

other than a metal salt of phosphoric acid and a metal salt of phosphoric acid wherein the PVC has been polymerized at a temperature in the range of about 0° to 60° C and in the presence of about 5 parts to about 50 parts by weight of a solvent capable of dissolving PVC based on 100 parts by weight of the monomer or monomers.

2. The composition of Claim 1 wherein said primary stabilizer is present in an amount within the range of from about 0.5 to about 5.0 parts by weight of primary stabilizer per 100 parts by weight of said resin and said metal salt of phosphoric acid is present in an amount within the range of from about 0.1 part to about 7.0 parts by weight of said metal salt of phosphoric acid per 100 parts by weight of said polyvinyl chloride.

3. The composition of Claim 2 wherein the amount of metal salt of phosphoric acid is from about 0.1 parts to about 5.0 parts of PVC.

4. The composition of Claim 3 wherein the amount of metal salt of phosphoric acid is from about 0.2 part to about 3.0 parts.

5. The composition of Claim 1 wherein the solvent is an ether, a ketone or an aromatic hydrocarbon.

6. The composition of Claim 5 wherein the solvent is a cyclic ether.

7. The composition of Claim 6 wherein the solvent is tetrahydrofuran.

8. The composition of Claim 1 wherein the PVC resin is a homopolymer.

9. The composition of Claim 1 wherein the PVC resin is a copolymer of vinyl chloride and one or more copolymerizable monomers.

10. The composition of Claim 9 wherein the copolymerizable monomers are an acrylate or a methacrylate.

11. The composition of Claim 1 wherein said metal salt of phosphoric acid is a sodium salt of phosphoric acid.

12. The composition of Claim 1 wherein said metal salt of phosphoric acid is disodium hydrogen phosphate.

13. The composition of Claim 1 wherein said primary stabilizer is an organo-tin stabilizer.

14. A polymeric article wherein the article is formed from a polymeric composition comprising polyvinyl chloride resin (PVC), a primary stabilizer for said PVC other than a metal salt of phosphoric acid, and a metal salt of phosphoric acid; wherein the PVC has been polymerized at a temperature in the range of about 0° to 60° C and in the presence of about 5 parts to about 50 parts by weight of tetrahydrofuran, based on 100 parts by weight of the monomer or monomers.

15. The article of Claim 14 which is a water vessel, a panel or a heating or air conditioning component.

16. A process for the preparation of a polymeric composition comprising polyvinyl chloride resin (PVC) and a metal salt of phosphoric acid wherein the PVC has been polymerized at a temperature in the range of about 0° to 60° C and in the presence of about 5 parts to about 50 parts by weight of tetrahydrofuran, based on 100 parts by weight of the monomer or monomers which comprises the step of contacting the PVC with the metal salt of phosphoric acid.

17. The process of Claim 16 wherein the metal salt of phosphoric acid is in an aqueous solution.

18. The process of Claim 16 wherein the metal salt of phosphoric acid is added to the PVC in powder form.

19. The process of Claim 17 wherein the metal salt of phosphoric acid is added to the resin prior to compounding.

**20.** The process of Claim 18 wherein the metal salt of phosphoric acid is added to the resin prior to compounding.

**21.** A process for molding an article wherein the article is molded from a polymeric composition comprising polyvinyl chloride resin (PVC), a primary stabilizer for said PVC other than a metal salt of phosphoric acid, and a metal salt of phosphoric acid wherein said PVC has been polymerized at a temperature in the range of about 0° to 60° C in the presence of about 5 parts to about 50 parts by weight of a solvent, based on 100 parts by weight of the monomer or monomers.

**22.** The molding process of Claim 21 which is hot runner molding.

**23.** The molding process of Claim 21 which is accumulator blow molding.